# NEUE EUROPÄISCHE PATENTSCHRIFT

(11) **EP 3 212 448 B2**
(45) Veröffentlichungstag und Bekanntmachung des Hinweises auf die Entscheidung über den Einspruch: **13.10.2021**
(45) Hinweis auf die Patenterteilung: 07.11.2018
(21) Anmeldenummer: 15784696.5
(22) Anmeldetag: 23.10.2015
(51) Int. Cl.: B60K 15/035

(54) **BETRIEBSFLÜSSIGKEITSBEHÄLTER FÜR EIN KFZ AUS THERMOPLASTISCHEM KUNSTSTOFF**
MOTOR VEHICLE OPERATING FLUID CONTAINER MADE OF THERMOPLASTIC
RÉSERVOIR DE FLUIDE DE FONCTIONNEMENT DESTINÉ À UN VÉHICULE AUTOMOBILE ET COMPOSÉ D'UN MATÉRIAU THERMOPLASTIQUE

(30) Priorität: 31.10.2014 DE 102014222286
(43) Veröffentlichungstag der Anmeldung: 06.09.2017
(73) Patentinhaber: Kautex Textron GmbH & Co. KG, 53229 Bonn (DE)
(72) Erfinder: SCHÜLLER, Markus, 53179 Bonn (DE)
(74) Vertreter: Richly & Ritschel Patentanwälte PartG mbB
(86) Internationale Anmeldenummer: PCT/EP2015/074611
(87) Internationale Veröffentlichungsnummer: WO 2016/066545

(56) Entgegenhaltungen:
- EP-A1- 0 921 025
- EP-A1- 2 930 042
- EP-A2- 1 213 173
- EP-A2- 1 745 971
- EP-B1- 1 332 063
- WO-A1-01/21428
- WO-A1-2010/081853
- DE-A1-102012 108 273
- US-A- 4 514 980
- US-A- 5 529 086
- US-A1- 2006 016 741
- US-A1- 2011 278 286
- Henrik Eriksson et al: "Single material plastic fuel tanks", Polymers in Automotive Fuel Containment 2005, 6 December 2005 (2005-12-06), pages 1-6, Hannover, Germany
- "1 Heated Tool Welding" In: M.J. Troughton: "Handbook of Plastics Joining: a practical guide. 2nd ed.", 2008, William Andrew Inc., Cambridge, UK ISBN: 978-0-8155-1581-4 pages 3-13,
- Anonymous: "Soudage de plastiques", Wikipédia, 12 October 2014 (2014-10-12), Retrieved from the Internet: URL:https://fr.wikipedia.org/w/index.php?t itle=Soudage_de_plastiques&oldid=108167709
- "Coque" In: Paul Robert et al: "Dictionnaire Le Nouveau Petit Robert", 2007 ISBN: 978-2-84902-133-4 pages 540-541,
- Anonymous: "Leitung", Dictionnaire en ligne wissen.de, 14 January 2012 (2012-01-14), Retrieved from the Internet: URL:https://www.wissen.de/search?keyword=L eitung

## Beschreibung

Die Erfindung betrifft ein Betriebsflüssigkeitsbehälter für ein Kfz aus thermoplastischem Kunststoff, wobei der Behälter aus zwei Schalen zu einem im Wesentlichen geschlossenen Hohlkörper zusammengesetzt ist.

Unter einem Betriebsflüssigkeitsbehälter für ein Kfz im Sinne der vorliegenden Erfindung ist beispielsweise ein Kraftstoffbehälter, ein Wischwaschbehälter für Scheibenreinigungsflüssigkeit oder ein Additivbehälter zur Aufnahme eines Kraftstoffadditivs oder zur Aufnahme eines Additivs zur Abgasreinigung zu verstehen. Der Behälter kann beispielsweise als Behälter zur Aufnahme einer wässrigen Harnstofflösung zwecks selektiver katalytischer Abgasentstickung ausgebildet sein.

Grundsätzlich ist es bekannt, solche Betriebsflüssigkeitsbehälter aus thermoplastischem Kunststoff auszubilden. Diese können beispielsweise durch Extrusionsblasformen, Rotationssintern, Spritzgießen oder Tiefziehen hergestellt werden. Jedenfalls sind solche Betriebsflüssigkeitsbehälter je nach Funktionalität mit verschiedensten Einbauteilen versehen. Üblicherweise weisen solche Behälter darüber hinaus wenigstens eine Einfüllöffnung und eine oder mehrere Belüftungsöffnungen auf. Die Belüftung des Betriebsflüssigkeitsbehälters ist jedenfalls bei der Befüllung, gegebenenfalls auch dauerhaft erforderlich. Üblicherweise unterscheidet man zwischen der sogenannten Betankungsentlüftung und der Betriebsentlüftung. Bei der Befüllung des Betriebsflüssigkeitsbehälters muss das durch den Befüllvolumenstrom verdrängte Gasvolumen abgeführt werden. Hierzu ist es erforderlich, an einer oder mehreren Stellen des Betriebsflüssigkeitsbehälters Entlüftungspunkte vorzusehen, die an Entlüftungsleitungen angeschlossen sind.

Entlüftungsleitungen können sowohl innerhalb des Betriebsflüssigkeitsbehälters als auch außerhalb des Betriebsflüssigkeitsbehälters angeordnet sein und werden üblicherweise zu einem einzigen Entlüftungsanschluss am Kfz geführt, der gegebenenfalls die Schnittstelle zur Atmosphäre darstellt. Bei einem Kraftstoffbehälter wird die sogenannte Betankungsentlüftungsleitung üblicherweise zum Einfüllkopf eines Einfüllrohres geführt.
Ist der Betriebsflüssigkeitsbehälter als Harnstoffbehälter ausgeführt, kann die Betankungsentlüftungsleitung sowohl zu einem Einfüllkopf als auch zu einer Entlüftungsöffnung in einem Radhaus des Kfz geführt sein.
Grundsätzlich ist die Verlegung von Entlüftungsleitungen innerhalb des Betriebsflüssigkeitsbehälters verhältnismäßig aufwendig und mit hohen Herstellungskosten verbunden.
Außerhalb des Betriebsflüssigkeitsbehälters verlegte Leitungen müssen so am Behälter befestigt sein, dass diese nicht klappern und möglichst wenig Bauraum beanspruchen. Darüber hinaus müssen diese Leitungen lösbar an dem Betriebsflüssigkeitsbehälter befestigt sein, so dass der Betriebsflüssigkeitsbehälter im Servicefall einfach austauschbar ist. Dazu ist es erforderlich, in den Leitungen Schnellverschlüsse vorzusehen, was unter Kostengesichtspunkten verhältnismäßig aufwendig ist.
Bei vielen kleinvolumigen Betriebsflüssigkeitsbehältern besteht grundsätzlich der Wunsch, Entlüftungsleitungen an der Behälteraußenseite anzubringen und möglichst wenige Entlüftungspunkte am Betriebsflüssigkeitsbehälter vorzusehen. Wenn nur ein einziger Entlüftungsanschluss an dem Betriebsflüssigkeitsbehälter vorgesehen sein soll, bietet sich hierfür an, diesen etwa im Flächenschwerpunkt eines Oberbodens eines Betriebsflüssigkeitsbehälters anzuordnen, dies erfordert jedoch je nach Einbausituation im Kfz eine verhältnismäßig aufwendige Verlegung der Leitungen an der Behälteraußenwand. Ein Betriebsflüssigkeitsbehälter gemäß dem Oberbegriffs des Anspruch 1 ist aus EP1745971 bekannt. Der Erfindung liegt daher die Aufgabe zugrunde, einen Betriebsflüssigkeitsbehälter bereitzustellen, der verhältnismäßig kostengünstig herstellbar ist und der insbesondere im Hinblick auf die Art und die Anzahl der vorzusehenden Betankungs- und/oder Betriebsentlüftungsleitungen verbessert ist.

Die Aufgabe wird gelöst durch einen Betriebsflüssigkeitsbehälter mit den Merkmalen des Anspruchs 1.

Vorteilhafte Ausgestaltungen der Erfindung ergeben sich aus den Unteransprüchen.

Nach einem Gesichtspunkt der vorliegenden Erfindung ist ein Betriebsflüssigkeitsbehälter für ein Kraftfahrzeug aus thermoplastischem Kunststoff vorgesehen, der aus zwei Schalen zu einem im Wesentlichen geschlossenen Hohlkörper zusammengesetzt ist, wobei eine erste Schale einen Behälteroberboden und eine zweite Schale einen Behälterunterboden bildet, umfassend wenigstens eine Leitung, die über wenigstens eine Teillänge als integraler Bestandteil einer Behälterwand ausgebildet ist, wobei die Leitung über diese Teillänge als in der Behälterwand verlaufender Kanal ausgebildet ist, der Kanal ein offenes rinnenförmiges Querschnittsprofil aufweist, das einen Teil des Leitungsquerschnitts bildet und der Kanal mit wenigstens einer Abdeckung verschlossen ist, die das rinnenartige Querschnittsprofil zu einem geschlossenen Querschnitt ergänzt.

Wie eingangs bereits erwähnt, ist unter einem Betriebsflüssigkeitsbehälter im Sinne der Erfindung beispielsweise ein Kraftstoffbehälter, beispielsweise ein Wischwaschbehälter zur Aufnahme von Scheibenreinigungsflüssigkeit oder beispielsweise ein Additivbehälter, beispielsweise zur Aufnahme eines flüssigen Additivs die selektive katalytische Abgasentstickung vorgesehen.

Der Betriebsflüssigkeitsbehälter gemäß der Erfindung besteht vorzugsweise aus einem thermoplastischem Kunststoff auf der Basis von HDPE, wobei der Behälter eine Behälterwand aufweisen kann, die einschichtig als auch mehrschichtig ausgebildet ist.

Die Schalen des Betriebsflüssigkeitsbehälters gemäß der Erfindung können beispielsweise durch Tiefziehen von Halbzeugen aus thermoplastischem Kunststoff, durch Rotationssintern, durch Spritzgießen von thermoplastischem Kunststoff oder auch beispielsweise durch Laminieren verschiedener Lagen thermoplastischen Kunststoffs erhalten worden sein.

Der Kerngedanke der Erfindung ist es, in wenigstens einer Schale wenigstens einen über einen Behälterunterboden oder über einen Behälteroberboden verlaufenden Abschnitt wenigstens einer rinnenförmige Vertiefung vorzusehen, die Teil eines einstückig mit der betreffenden Schale ausgebildeten Kanals ist. Das Querschnittsprofil eines so ausgebildeten Kanals kann beispielsweise außenseitig geöffnet sein und von außen mit einer Abdeckung verschlossen worden sein.

Alternativ kann allerdings der Kanal auch als behälterinnseitig offene Rinne oder Nut ausgebildet sein, die behälterinnenseitig mit einer Abdeckung verschlossen ist.

Der Kanal kann sich in der Ebene des Behälterunterbodens oder des Behälteroberbodens erstrecken. Erfindungsgemäß kann eine Vielzahl von integral mit der Behälterwand ausgebildeten Kanälen vorgesehen sein.

Der Kanal kann beispielsweise ein U-förmiges, V-förmiges oder teilkreissegmentförmiges Querschnittsprofil aufweisen.

Die Abdeckung kann ebenfalls aus thermoplastischem Kunststoff bestehen und beispielsweise mit der Behälterwand so verschweißt sein, dass die Abdeckung den Kanal zu einem allseits geschlossenen und umfänglich abgedichteten Querschnittsprofil ergänzt.

Alternativ kann die Abdeckung in den Kanal eingeschnappt sein, beispielsweise formschlüssig mit der Behälterwand verrastet sein, gegebenenfalls unter Zwischenlage eines separaten Dichtmittels.

Bei einer zweckmäßigen Variante des Betriebsflüssigkeitsbehälters gemäß der Erfindung erstreckt sich der Kanal im Oberboden des Behälters, da eine Entlüftung des Betriebsflüssigkeitsbehälters gemäß der Erfindung zweckmäßigerweise an dessen in der Einbaulage oberen Seite vorgesehen ist.

Der Betriebsflüssigkeitsbehälter gemäß der Erfindung umfasst zweckmäßigerweise eine in Einbaulage obere Behälterwand, die im Kontext der vorliegenden Anmeldung als Oberboden bezeichnet wird sowie eine in Einbaulage untere Behälterwand, die im Kontext der vorliegenden Erfindung als Unterboden bezeichnet wird. Der Oberboden und der Unterboden des Betriebsflüssigkeitsbehälters gemäß der Erfindung erstrecken sich vorzugsweise etwa parallel zueinander, randseitig gehen der Oberboden und der Unterboden zweckmäßigerweise jeweils in eine stirnseitige Umfassungswand über. Der Oberboden und der Unterboden des Behälters kann jeweils in sich versprungen ausgebildet sein, das heißt eine Topographie aufweisen, die sich in mehreren Ebenen erstreckt. Im Allgemeinen definieren allerdings der Oberboden und der Unterboden des Betriebsflüssigkeitsbehälters jeweils eine Bezugsebene.

Die Begriffe "Betriebsflüssigkeitsbehälter" einerseits, "Behälter" andererseits im Sinne dieser Anmeldung werden synonym verwendet.

Gemäß der Erfindung ist vorgesehen, dass sich der Kanal von einem ersten zentralen Anschlusspunkt im Oberboden des Behälters zu einem zweiten Anschlusspunkt an einem äußeren Rand des Oberbodens erstreckt, wobei der zentrale Anschlusspunkt etwa in einem Flächenschwerpunkt des Oberbodens angeordnet ist. Der zentrale Anschlusspunkt kann beispielsweise als zentraler Entlüftungsanschluss des Betriebsflüssigkeitsbehälters ausgebildet sein. Die Anordnung des Anschlusspunkts im Flächenschwerpunkt des Oberbodens hat den Vorzug, dass eine optimale Betankungsentlüftung oder Betriebsentlüftungsleitung auch bei Schräglage des Kraftfahrzeuges möglich ist.

Der äußere Rand des Oberbodens kann beispielsweise in eine umlaufende seitliche Umfassungswand des Behälters übergehen, aus welcher beispielsweise ein zweiter Anschlusspunkt der Leitung hinausgeführt sein kann.

Der zweite Anschlusspunkt kann beispielsweise als einstückig an die betreffende Schale angeformter Anschlussfitting ausgebildet sein.

Zweckmäßigerweise ist die Leitung eine Entlüftungsleitung des Behälters, bevorzugt eine Betankungsentlüftungsleitung, wobei allerdings die Leitung auch als Befüllleitung oder als Entnahmeleitung ausgebildet sein kann.

Obwohl vorstehend von einer Leitung die Rede ist, ist die Erfindung so zu verstehen, dass der Betriebsflüssigkeitsbehälter gemäß der Erfindung mehrere Leitungen umfassen kann, die jeweils als integraler Bestandteil einer Behälterwand ausgebildet sind.

Der Betriebsflüssigkeitsbehälter gemäß der Erfindung ist bevorzugt aus spritzgegossenen Halbschalen ausgebildet, die den Vorzug aufweisen, dass Anschlussnippel und Anschlussfittings einstückig angespritzt sein können.

Bei einer zweckmäßigen Variante des Betriebsflüssigkeitsbehälters gemäß der Erfindung ist vorgesehen, dass sich die Leitungen zwischen einem Befüllentlüftungsventil oder einem Betriebsentlüftungsventil und dem zweiten Anschlusspunkt erstreckt.

Teile des Befüllentlüftungsventils, des Betriebsentlüftungsventils oder eines Ventilgehäuses können beispielsweise einstückig an die Abdeckung des Kanals angeformt sein.

Bei einer vorteilhaften Ausführungsform des Betriebsflüssigkeitsbehälters gemäß der Erfindung ist vorgesehen, dass die Behälterwand Verdickungen aufweisen, die eine randseitige Einfassung des Kanals bilden. Diese Verdickungen sind besonders vorteilhaft als sogenannte Schweißzugabe, wenn die Abdeckung mit der Behälterwand verschweißt werden soll.

Unter Verschweißen in diesem Sinne ist eine Verschweißung der Abdeckung mit der Behälterwand durch gegenseitige Durchdringung beziehungsweise Verschlaufung der Moleküle der zu verschweißenden Materialien unter Aufbringung von Temperatur und Druck zu verstehen. Das Schweißen der Abdeckung mit der Behälterwand kann beispielsweise durch Heizspiegelschweißen, Laserschweißen oder auch Reibschweißen erfolgen.

Bei einer zweckmäßigen Variante des Betriebsflüssigkeitsbehälters ist vorgesehen, dass die Abdeckung eine einstückig angeformte Ventilgehäuseaufnahme aufweist. Ein Ventilgehäuse für ein Betankungsentlüftungsventil oder ein Betriebsentlüftungsventil kann beispielsweise mit der Ventilgehäuseaufnahme verschweißt, verrastet oder verschraubt oder auch verklebt sein.

Der Kanal mündet zweckmäßigerweise in eine Öffnung in der Behälterwand zur Aufnahme eines Ventilgehäuses. Diese Öffnung kann den zentralen Anschlusspunkt im Behälteroberboden des Betriebsflüssigkeitsbehälters bilden.

Bei einer besonders bevorzugten Variante des Betriebsflüssigkeitsbehälters gemäß der Erfindung ist vorgesehen, dass die Abdeckung aus einem elektrisch leitfähigen thermoplastischen Kunststoff ausgebildet ist. Dies kann beispielsweise zweckmäßig sein, wenn die Leitung als Befüllleitung für einen Kraftstoffbehälter als Betriebsflüssigkeitsbehälter ausgebildet ist.

Es kann ebenso zweckmäßig sein, dass die Leitung als Betankungsentlüftungsleitung oder Betriebsentlüftungsleitung eines Additivbehälters ausgebildet ist. In diesem Fall kann die Eigenschaft der elektrischen Leitfähigkeit des Materials der Abdeckung dazu genutzt werden, eine elektrische Beheizbarkeit der Abdeckung zu bewerkstelligen. Das kann insbesondere dann vorteilhaft sein, wenn der Betriebsflüssigkeitsbehälter als Behälter zur Aufnahme eines wässrigen Additivs zur Abgasentstickung ausgebildet ist. Dadurch kann insbesondere im Winterbetrieb sichergestellt werden, dass etwa in der Leitung kondensiertes Additiv nicht einfriert.

Grundsätzlich kann die Abdeckung als elektrisches Heizelement ausgebildet sein, wobei beispielsweise auch die Heizungsfunktion dadurch gewährleistet sein kann, dass elektrisch leitende Elemente in den Kunststoff der Abdeckung eingebettet sind, wobei dann an die elektrisch leitenden Elemente eine elektrische Spannung anlegbar ist. De Beheizbarkeit der Abdeckung kann alternativ dadurch sichergestellt werden, dass in die Abdeckung ein oder mehrere PTC Elemente integriert sind oder dass die Abdeckung als PTC Element ausgebildet ist.

Alternativ kann die Abdeckung geschlossene Kanäle aufweisen, die mit einem Wärmetauschermedium beaufschlagbar sind, beispielsweise mit Kühlflüssigkeit aus dem Kühlkreislauf der Brennkraftmaschine. In diesem Fall ist die Abdeckung selbst als mediumbeströmbarer Wärmetauscher ausgebildet.

Weiterhin kann die Abdeckung einstückig angeformte Prallelemente als Tropfenabscheider aufweisen. Diese Prallelemente können eine labyrinthartige Unterteilung der Leitung bewirken, an der sich etwa bei der Betankungsentlüftung mitgerissene Tröpfchen abscheiden können.

Die Abdeckung kann beispielsweise auch wenigstens einen einstückig angeformten Anschlussfitting aufweisen.

Die Erfindung wird nachstehend anhand eines in den Zeichnungen dargestellten Ausführungsbeispiels erläutert.

Es zeigen:
- Figur 1: eine Draufsicht auf einen Betriebsflüssigkeitsbehälter gemäß der Erfindung,
- Figur 2: eine perspektivische Unteransicht eines Oberbodens des Betriebsflüssigkeitsbehälters gemäß der Erfindung,
- Figur 3: eine Vergrößung des Ausschnitts III in Figur 2,
- Figur 4: eine Ansicht der Abdeckung des Kanals, wobei die Abbildung die sichtbare Außenseite der Abdeckung zeigt,
- Figur 5: eine Darstellung der Unterseite der in Figur 4 gezeigten Abdeckung und
- Figur 6: eine Draufsicht auf den Betriebsflüssigkeitsbehälter ohne Abdeckung.

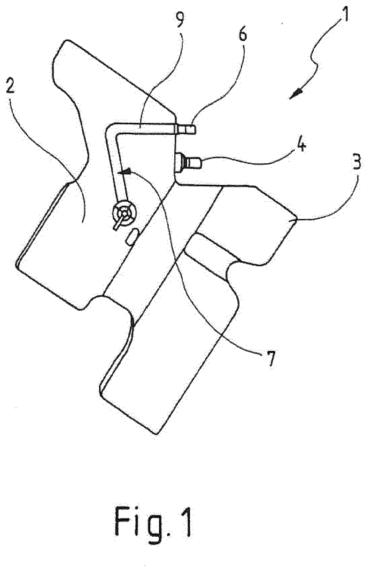

Es wird zunächst Bezug genommen auf Figur 1, die eine Draufsicht auf den Oberboden 2 des Betriebsflüssigkeitsbehälters 1 gemäß der Erfindung zeigt. Der Betriebsflüssigkeitsbehälter 1 gemäß Ausführungsbeispiel besteht aus zwei Schalen aus thermoplastischem Kunststoff, nämlich eine Oberschale und eine Unterschale, von denen in den Zeichnungen nur die einen Oberboden 2 bildende Oberschale 3 sichtbar ist. Die Oberschale 3 ist ebenso wie die nicht dargestellte Unterschale vorzugsweise durch Spritzgießen von thermoplastischem Kunststoff hergestellt worden. Die Oberschale 3 und die Unterschale sind randseitig zu dem geschlossenen Betriebsflüssigkeitsbehälter 1 miteinander verschweißt.

Der Betriebsflüssigkeitsbehälter 1 kann Funktionseinbauteile in dem von dem Betriebsflüssigkeitsbehälter 1 umschlossenen Volumen umfassen. Auf diese wird im Folgenden nicht eingegangen.

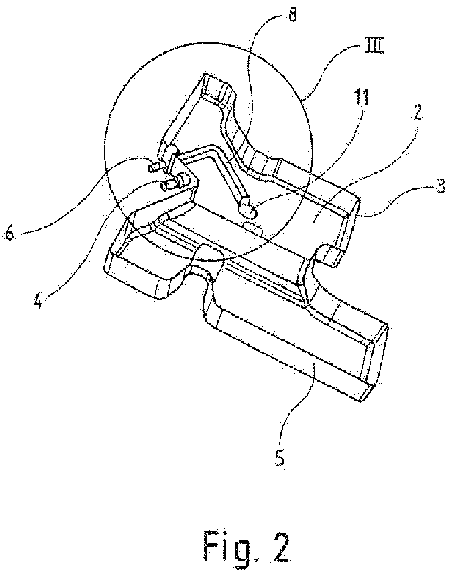

Wie dies aus den Figuren 1 und 2 sichtbar ist, umfasst die Oberschale 3 des Betriebsflüssigkeitsbehälters 1 einen einstückig angeformten ersten Anschlussfitting 4, der eine Einfüllöffnung des Betriebsflüssigkeitsbehälters 1 bildet. Der erste Anschlussfitting 4 ist an eine Umfassungswand 5 der Oberschale 3 angeformt. Ein neben dem ersten Anschlussfitting 4 vorgesehener zweiter Anschlussfitting 6 bildet einen Entlüftungsanschluss an eine Entlüftungsleitung 7 des Betriebsflüssigkeitsbehälters 1. Die Entlüftungsleitung 7 ist als Leitung im Sinne der Erfindung vorgesehen, die als integraler Bestandteil der Behälterwand des Betriebsflüssigkeitsbehälters 1 ausgebildet ist.

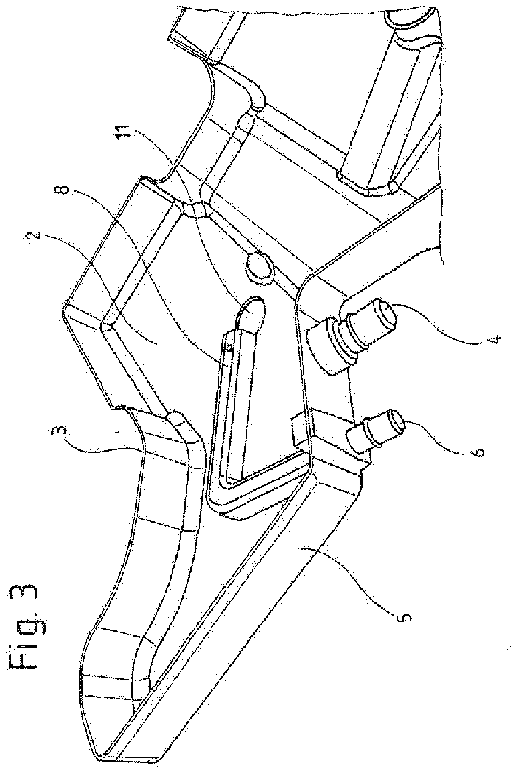

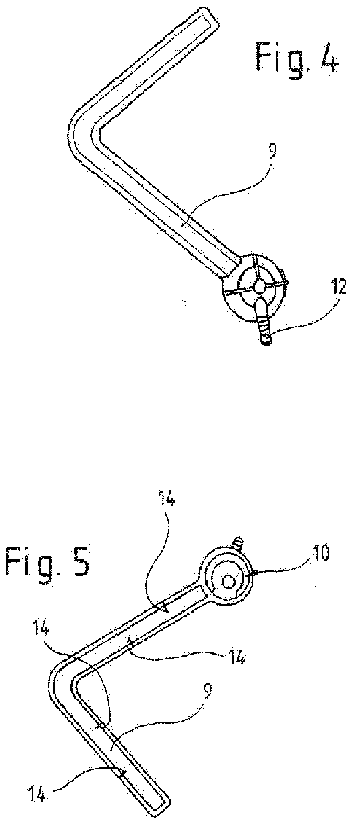

Wie insbesondere aus den Figuren 2 und 3 zu entnehmen ist, wird die Entlüftungsleitung 7 durch eine in der Behälterwand des Oberbodens 2 verlaufenden, einstückig mit der Behälterwand ausgebildeten Kanal 8 ausgebildet, wobei der Kanal 8 ein nutförmiges oder U-förmiges nach außen offenes, rinnenförmiges Querschnittsprofil aufweist. Der Kanal 8 ist nach außen durch die in den Figuren 4 und 5 dargestellte Abdeckung 9 abgedeckt, wobei die Abdeckung mit der Behälterwand der Oberschale 3 von außen verschweißt ist. Die Abdeckung 9 ist dem gekrümmten Verlauf des Kanals 8 in dem Oberboden 2 des Betriebsflüssigkeitsbehälters 1 folgend ausgebildet und ist an einem Ende mit einer Aufnahme 10 für ein Ventilgehäuse versehen.

Die Abdeckung 9 bewirkt eine vollständige umfängliche Abdichtung des Kanals 8. Die Figuren 2 und 3 zeigen eine Innenansicht der Oberschale 3 ohne die den Kanal 8 verschließende Abdeckung 9. Der Kanal 8 erstreckt sich von dem zweiten Anschlussfitting 6 zu einer zentral im Oberboden 2 vorgesehene Öffnung 11, die als Auskreisung der Behälterwand der Oberschale 3 ausgebildet ist.

Mit dem Bezugszeichen 14 sind in Figur 5 Prallelemente bezeichnet, die an die Abdeckung 9 angeformt sind und die als Tropfenabscheider wirken, da sie in dem Kanal 8 ein Labyrinth bilden.

Die Öffnung 11 bildet den ersten zentralen Anschlusspunkt im Oberboden 2 des Behälters, wohingegen der zweite Anschlussfitting 6 den zweiten Anschlusspunkt an dem äußeren Rand des Oberbodens 2 definiert.

In die Öffnung 11 wird ein in die Aufnahme 10 der Abdeckung 9 eingesetztes Ventilgehäuse von außen eingeführt, und zwar derart, dass der Kanal 8 in das Ventilgehäuse münden kann.

Die Abdeckung 9 verschließt die Öffnung 11 sowie den Kanal 8 randseitig, wobei die Abdeckung auf die Behälterwand des Oberbodens 2 beziehungsweise der Oberschale 3 aufgeschweißt worden sein kann.

Die geschlossene Konfiguration des Kanals 8 mit der mit der Oberschale 3 verschweißten Abdeckung 9 ist in Figur 1 dargestellt.

Bei dem gezeigten Ausführungsbeispiel definiert die Aufnahme 10 an der Abdeckung 9 einen von dem Betankungsentlüftungsweg getrennten Betriebsentlüftungsweg. Hierzu ist an der Abdeckung 9 ein dritter Anschlussfitting 12 vorgesehen, der ein Tannenbaumprofil aufweist, auf welches eine Schlauchleitung aufsteckbar ist.

Auf den ersten Anschlussfitting 4 kann ein Einfüllrohr oder ein Einfüllschlauch aufgesteckt sein, wobei das Einfüllrohr oder der Einfüllschlauch zu einem nicht dargestellten Einfüllkopf mit einem entsprechend ausgebildeten Mundlochstutzen zur Aufnahme eines Zapfventils geführt sein können. An den zweiten Anschlussfitting 6 kann eine außerhalb des Betriebsflüssigkeitsbehälters 1 verlegte und an diesen Einfüllkopf geführte Entlüftungsleitung angeschlossen sein.

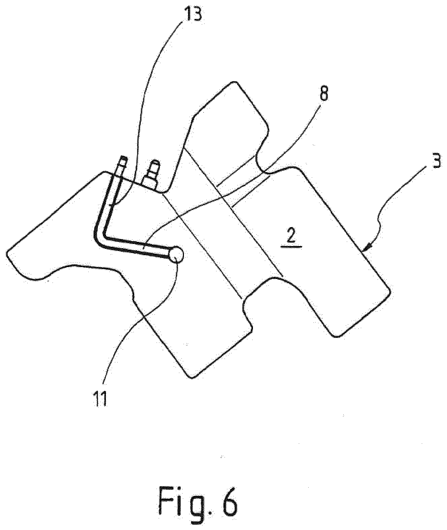

Figur 6 zeigt den Oberboden 2 des Betriebsflüssigkeitsbehälters 1 ohne Abdeckung 9. Wie in der Figur andeutungsweise dargestellt ist, ist der Kanal 8 randseitig von einer Verdickung 13 eingefasst, die als Schweißzugabe zwecks Anschweißung der Abdeckung 9 dient.

### Bezugszeichenliste

- 1: Betriebsflüssigkeitsbehälter
- 2: Oberboden
- 3: Oberschale
- 4: erster Anschlussfitting
- 5: Umfassungswand
- 6: zweiter Anschlussfitting
- 7: Entlüftungsleitung
- 8: Kanal
- 9: Abdeckung
- 10: Aufnahme
- 11: Öffnung
- 12: dritter Anschlussfitting
- 13: Verdickung
- 14: Prallelemente

## Patentansprüche

1. Betriebsflüssigkeitsbehälter (1) für ein Kraftfahrzeug aus thermoplastischem Kunststoff, wobei der Behälter aus zwei Schalen zu einem im Wesentlichen geschlossenen Hohlkörper zusammengesetzt ist, wobei eine erste Schale einen Oberboden (2) des Behälters und eine zweite Schale einen Unterboden des Behälters bildet, umfassend wenigstens eine Leitung (7), die über wenigstens eine Teillänge als integraler Bestandteil einer Behälterwand ausgebildet ist, wobei die Leitung (7) über diese Teillänge als in der Behälterwand verlaufender Kanal (8) ausgebildet ist, der Kanal ein offenes, rinnenförmiges Querschnittsprofil aufweist, das einen Teil des Leitungsquerschnitts bildet und der Kanal (8) mit wenigstens einer Abdeckung (9) verschlossen ist, die das rinnenförmige Querschnittsprofil zu einem geschlossenen Querschnitt ergänzt, **dadurch gekennzeichnet, dass** sich der Kanal (8) von einem ersten zentralen Anschlusspunkt im Oberboden (2) des Behälters zu einem Anschlusspunkt an einem äußeren Rand des Oberbodens (2) erstreckt, wobei der zentrale Anschlusspunkt etwa in einem Flächenschwerpunkt des Oberbodens (2) angeordnet ist.

2. Betriebsflüssigkeitsbehälter nach Anspruch 1, **dadurch gekennzeichnet, dass** die Abdeckung (9) mit der Behälterwand verschweißt ist.

3. Betriebsflüssigkeitsbehälter nach einem der Ansprüche 1 oder 2, **dadurch gekennzeichnet, dass** der Kanal (8) sich im Oberboden (2) des Behälters erstreckt.

4. Betriebsflüssigkeitsbehälter nach einem der Ansprüche 1 bis 3, **dadurch gekennzeichnet, dass** der zweite Anschlusspunkt als einstückig an die betreffende Schale angeformter Anschlussfitting (6) ausgebildet ist.

5. Betriebsflüssigkeitsbehälter nach einem der Ansprüche 1 bis 4, **dadurch gekennzeichnet, dass** die Leitung eine Entlüftungsleitung (7) des Behälters ist.

6. Betriebsflüssigkeitsbehälter nach einem der Ansprüche 1 bis 5, **dadurch gekennzeichnet, dass** sich die Leitung zwischen einem Befüllentlüftungsventil und dem zweiten Anschlusspunkt erstreckt.

7. Betriebsflüssigkeitsbehälter nach einem der Ansprüche 2 bis 6, **dadurch gekennzeichnet, dass** die Behälterwand Verdickungen (13) aufweist, die eine randseitige Einfassung des Kanals (8) bilden.

8. Betriebsflüssigkeitsbehälter nach einem der Ansprüche 1 bis 7, **dadurch gekennzeichnet, dass** die Abdeckung (9) eine einstückig angeformte Ventilgehäuseaufnahme aufweist.

9. Betriebsflüssigkeitsbehälter nach einem der Ansprüche 1 bis 8, **dadurch gekennzeichnet, dass** die Abdeckung (9) aus einem elektrisch leitfähigen thermoplastischen Kunststoff ausgebildet ist.

10. Betriebsflüssigkeitsbehälter nach einem der Ansprüche 1 bis 9, **dadurch gekennzeichnet, dass** die Abdeckung (9) als elektrisches Heizelement ausgebildet ist oder ein elektrisches Heizelement umfasst.

11. Betriebsflüssigkeitsbehälter nach einem der Ansprüche 1 bis 10, **dadurch gekennzeichnet, dass** die Abdeckung (9) einstückig angeformte Prallelemente (14) als Tropfenabscheider aufweist.

12. Betriebsflüssigkeitsbehälter nach einem der Ansprüche 1 bis 11, **dadurch gekennzeichnet, dass** die Abdeckung (9) wenigstens einen einstückig angeformten Anschlussfitting (12) aufweist.

## Claims

1. Operating fluid container (1) for a motor vehicle made of thermoplastic material, the container being composed of two shells so as to form a substantially closed hollow body, a first shell forming a top (2) of the container and a second shell forms a bottom of the container, said operating fluid container comprising at least one line (7), which is formed as an integral component part of a container wall over at least a partial length, the line (7) being formed over said partial length as a channel (8) running in the container wall, the channel has an open, trough-shaped cross-sectional profile which forms a part of the line cross section, and the channel (8) is closed by at least one cover (9), which complements the trough-shaped cross-sectional profile so as to form a closed cross section, **characterized in that** the channel (8) extends from a first central connection point in the top (2) of the container to a connection point at an outer edge of the top (2), the central connection point being arranged approximately in a centroid of the area of the top (2).

2. Operating fluid container according to Claim 1, **characterized in that** the cover (9) is welded to the container wall.

3. Operating fluid container according to either of Claims 1 and 2, **characterized in that** the channel (8) extends in the top (2) of the container.

4. Operating fluid container according to one of Claims 1 to 3, **characterized in that** the second connection point is formed as a connection fitting (6) integrally formed on the shell in question.

5. Operating fluid container according to one of Claims 1 to 4, **characterized in that** the line is a ventilation line (7) of the container.

6. Operating fluid container according to one of Claims 1 to 5, **characterized in that** the line extends between a filling ventilation valve and the second connection point.

7. Operating fluid container according to one of Claims 2 to 6, **characterized in that** the container wall has thickened portions (13), which form an edge-side surround of the channel (8).

8. Operating fluid container according to one of Claims 1 to 7, **characterized in that** the cover (9) has an integrally formed valve housing receptacle.

9. Operating fluid container according to one of Claims 1 to 8, **characterized in that** the cover (9) is formed from an electrically conductive thermoplastic material.

10. Operating fluid container according to one of Claims 1 to 9, **characterized in that** the cover (9) is formed as an electrical heating element or comprises an electrical heating element.

11. Operating fluid container according to one of Claims 1 to 10, **characterized in that** the cover (9) has integrally formed baffle elements (14) as a droplet separator.

12. Operating fluid container according to one of Claims 1 to 11, **characterized in that** the cover (9) has at least one integrally formed connection fitting (12).

## Revendications

1. Réservoir à liquide de fonctionnement (1) pour un véhicule automobile en matière thermoplastique, le réservoir étant constitué de deux coques formant un corps creux sensiblement fermé, une première coque formant un fond supérieur (2) du réservoir et une deuxième coque un fond inférieur du réservoir, comprenant au moins une conduite (7) qui, au moins sur une longueur partielle, est réalisée sous la forme d'un élément structural intégral d'une paroi de réservoir, la conduite (7), sur cette longueur partielle, étant réalisée sous la forme d'un canal (8) qui s'étend dans la paroi de réservoir, le canal possédant un profilé de section transversale ouvert en forme de rigole qui forme une partie de la section transversale de conduite et le canal (8) est fermé par au moins un cache protecteur (9) qui complète le profilé de section transversale en forme de rigole pour former une section transversale fermée, **caractérisé en ce que** le canal (8) s'étend depuis un premier point de raccordement central dans le fond supérieur (2) du réservoir à un point de raccordement au niveau d'un bord extérieur du fond supérieur (2), le point de raccordement central étant disposé approximativement en un barycentre géométrique du fond supérieur (2).

2. Réservoir à liquide de fonctionnement selon la revendication 1, **caractérisé en ce que** le cache protecteur (9) est soudé à la paroi de réservoir.

3. Réservoir à liquide de fonctionnement selon l'une des revendications 1 ou 2, **caractérisé en ce que** le canal (8) s'étend dans le fond supérieur (2) du réservoir.

4. Réservoir à liquide de fonctionnement selon l'une des revendications 1 à 3, **caractérisé en ce que** le deuxième point de raccordement est réalisé sous la forme d'une pièce de raccordement (6) surmoulée d'un seul tenant sur la coque concernée.

5. Réservoir à liquide de fonctionnement selon l'une des revendications 1 à 4, **caractérisé en ce que** la conduite est une conduite de dégazage (7) du réservoir.

6. Réservoir à liquide de fonctionnement selon l'une des revendications 1 à 5, **caractérisé en ce que** la conduite s'étend entre une valve de dégazage de remplissage et le deuxième point de raccordement.

7. Réservoir à liquide de fonctionnement selon l'une des revendications 2 à 6, **caractérisé en ce que** la paroi de réservoir possède des épaississements (13) qui forment un encadrement côté bord du canal (8).

8. Réservoir à liquide de fonctionnement selon l'une des revendications 1 à 7, **caractérisé en ce que** le cache protecteur (9) possède un logement de corps de valve surmoulé d'un seul tenant.

9. Réservoir à liquide de fonctionnement selon l'une des revendications 1 à 8, **caractérisé en ce que** le cache protecteur (9) est réalisé dans une matière thermoplastique électriquement conductrice.

10. Réservoir à liquide de fonctionnement selon l'une des revendications 1 à 9, **caractérisé en ce que** le cache protecteur (9) est réalisé sous la forme d'un élément chauffant électrique ou comporte un élément chauffant électrique.

11. Réservoir à liquide de fonctionnement selon l'une des revendications 1 à 10, **caractérisé en ce que** le cache protecteur (9) possède des éléments formant chicane (14) surmoulés d'un seul tenant en tant que pare-gouttes.

12. Réservoir à liquide de fonctionnement selon l'une des revendications 1 à 11, **caractérisé en ce que** le cache protecteur (9) possède au moins une pièce de raccordement (12) surmoulée d'un seul tenant.
